# FASCICULE DE BREVET EUROPEEN

(11) **EP 2 080 975 B1**
(45) Date de publication et mention de la délivrance du brevet: **20.10.2010**
(21) Numéro de dépôt: 09150032.2
(22) Date de dépôt: 05.01.2009
(51) Int. Cl.: F28D 7/14, F28D 7/10, F28D 20/00, F24H 9/00

(54) **Dispositif d'échange de chaleur entre des fluides appartenant à deux circuits**
Vorrichtung zum Wärmeaustausch zwischen Flüssigkeiten, die zwei verschiedenen Kreisläufen angehören
Device for heat exchange between fluids belonging to two circuits.

(30) Priorité: 16.01.2008 FR 0800222
(43) Date de publication de la demande: 22.07.2009
(73) Titulaire: Atlantic Climatisation et Ventilation, 69330 Meyzieu (FR)
(72) Inventeur: Saisset, Luc, 38460 Villemoirieu (FR); Chapelle, Jean-Paul, 01190 Saint Etienne sur Reyssouze (FR); Meljac, Laure, 74230 Thones (FR)
(74) Mandataire: Maureau, Philippe

(56) Documents cités:
- EP-A- 0 870 993
- EP-A- 1 103 775
- DE-U1-202005 017 583
- FR-A- 2 396 933
- NL-C2- 1 009 638
- US-A1- 2007 040 042

## Description

L'invention concerne un dispositif d'échange de chaleur entre des fluides appartenant à deux circuits.

Ces dispositifs comportent généralement un premier circuit dans lequel circule un fluide caloporteur destiné à alimenter des émetteurs et un second circuit dans lequel circule un fluide frigorigène soumis à des changements d'état.

Les émetteurs peuvent être notamment des planchers chauffants, des radiateurs ou des ventilo-convecteurs.

Ces dispositifs sont notamment destinés à équiper des installations de chauffage, éventuellement réversibles, de type pompe à chaleur en formant des condenseurs, ou des évaporateurs.

L'état de la technique fait état de quatre catégories de condenseurs équipant les pompes à chaleur dans lesquelles le fluide frigorigène échange de la chaleur avec de l'eau ou avec de l'eau associée à un anti-gel.

La première catégorie est constituée des condenseurs à serpentin. Dans ces dispositifs, un serpentin enroulé en spirale est logé dans réservoir. Les condenseurs à serpentin sont classés en deux sous ensembles selon que le fluide frigorigène circule dans le réservoir ou à l'intérieur du serpentin.

La deuxième catégorie concerne les condenseurs à plaques brasées. Ces condenseurs se composent de plusieurs plaques en acier inoxydable. Les plaques forment des espaces séparés les uns des autres, dans lesquels s'écoulent séparément le fluide frigorigène destiné à se condenser et l'eau à chauffer, associée ou non à un anti-gel. Les plaques sont conductnces et favorisent l'échange de chaleur.

La troisième catégorie est composée des condenseurs multitubulaires. Un grand nombre de tubes sont placés à l'intérieur d'une virole. Dans ces tubes circule l'eau à chauffer, associée ou non à un anti-gel. La condensation du fluide frigorigène s'effectue dans la virole, sur la surface extérieure des tubes à eau. A chaque extrémité de la virole se trouvent des boîtes à eau qui distribuent l'eau en série et en parallèle dans les divers tubes.

Enfin, la quatrième catégorie concerne les condenseurs à tubes coaxiaux, également appelés plus succinctement condenseurs coaxiaux. Ils se composent de deux tubes coaxiaux, respectivement un tube interne et un tube externe, enroulés ensemble en spirale. Dans le tube interne circule l'eau, associée ou non à un anti-gel, le fluide frigorigène circulant dans le tube externe, ou inversement. La paroi du tube interne peut être équipée d'ailettes, côté fluide frigorigène, pour favoriser l'échange thermique avec l'eau à chauffer.

Un échangeur de chaleur à tubes coaxiaux selon le préambule de la revendication 1 est connu du document DE-U-20 2005 017 563.

Quel que soit le condenseur, l'eau de chauffage associée ou non à un anti-gel est confinée dans des tubes tout au long du circuit de chauffage. Il se produit alors un phénomène de formation de boues difficile à résoudre puisque le nettoyage des condenseurs précités n'est généralement pas aisé.

En ce qui concerne les échangeurs à plaques, les pertes de charge côté eau sont importantes et nécessitent la présence de pompes de circulation puissantes. La résistance au gel est en outre très faible.

Dans le cas des échangeurs à plaques ou des échangeurs coaxiaux, le fluide frigorigène transfère efficacement son énergie de condensation, de désurchauffe et de sous-refroidissement, à l'eau ou à l'eau associée à l'anti-gel. Néanmoins, les volumes d'eau contenus dans ce type d'échangeurs sont faibles. Par conséquent, les condenseurs à plaques ou coaxiaux ont très peu d'inertie thermique, ce qui peut s'avérer problématique, en particulier lors des cycles de dégivrage.

Enfin, dans le cas des condenseurs coaxiaux, la surface d'échange entre le fluide frigorigène et l'eau, associée ou non à un anti-gel, se limite à la surface de la paroi du tube interne, ce qui réduit le rendement du dispositif.

Afin de remédier à ces inconvénients, la demande de brevet français déposée par la Demanderesse sous le numéro 07/01444 et non publiée à la date de dépôt de la présente demande, propose un dispositif d'échange de chaleur entre des fluides appartenant à deux circuits, respectivement un premier circuit dans lequel circule un fluide caloporteur destiné à alimenter des émetteurs et un second circuit dans lequel circule un fluide frigorigène soumis à des changements d'état, comportant un échangeur à tubes coaxiaux comprenant un tube interne destiné au passage du fluide caloporteur et un tube externe destiné au passage du fluide frigorigène, le dispositif d'échange de chaleur comportant en outre un réservoir, destiné à recevoir le fluide caloporteur et équipé d'une entrée de fluide caloporteur disposée en partie basse du réservoir et d'une sortie de fluide caloporteur disposée en partie haute, l'échangeur à tubes coaxiaux étant disposé à l'intérieur du réservoir et destiné à être immergé dans le fluide caloporteur, le tube interne étant raccordé à l'entrée de fluide caloporteur à une première extrémité et débouchant dans le réservoir à une seconde extrémité.

Un tel dispositif d'échange de chaleur permet de réduire les phénomènes d'embouage, tout en étant résistant au gel et adapté aux cycles de dégivrage.

L'invention vise à réaliser un dispositif d'échangeur de chaleur présentant les avantages exposés ci-dessus tout en ayant un rendement amélioré.

A cet effet, l'invention concerne un dispositif d'échange de chaleur entre des fluides appartenant à deux circuits selon la revendication 1.

Dans le cas où l'échangeur de chaleur est relié à une installation de chauffage, le fluide caloporteur est extrait du réservoir à une température élevée au niveau de la sortie de fluide caloporteur et est retourné au réservoir à une température plus faible au niveau de l'entrée de fluide caloporteur.

Dans ce cas, le fluide caloporteur échange de la chaleur avec la paroi interne du tube externe lors de son passage dans l'échangeur coaxial et avec la paroi externe du tube externe lorsque le fluide caloporteur débouche dans le réservoir.

La création d'une fuite en amont de l'échangeur coaxial permet d'injecter du fluide caloporteur plus froid dans le réservoir de manière à augmenter la différence de température entre le fluide caloporteur contenu dans le réservoir et le fluide circulant dans le tube externe de l'échangeur coaxial.

L'augmentation de la différence de température entre ces deux fluides permet d'améliorer l'efficacité de l'échange de chaleur entre ces fluides.

En outre, la création d'une fuite permet de favoriser le mouvement du fluide caloporteur à l'intérieur du réservoir et donc un renouvellement du fluide caloporteur au contact du tube externe. Ceci permet donc également d'augmenter l'efficacité de l'échange de chaleur entre le fluide caloporteur et le fluide frigorigène circulant dans le tube externe.

Ces deux phénomènes permettent donc d'augmenter sensiblement le rendement du dispositif d'échange de chaleur.

L'ouverture de fuite est dimensionnée de manière à créer une fuite de fluide caloporteur dans le réservoir d'un débit compris entre 20 et 60 % du débit fourni par l'entrée de fluide caloporteur.

Une telle plage offre un débit de fuite suffisant pour produire un mouvement du fluide caloporteur contenu dans le réservoir et pour générer une différence de température optimale entre le fluide caloporteur et le fluide circulant dans le tube externe. Une telle plage est en outre suffisamment faible pour qu'une partie importante du fluide caloporteur soit dirigée vers l'échangeur coaxial et soit chauffée lors de son passage dans celui-ci.

Préférentiellement, l'ouverture de fuite est dimensionnée de manière à créer une fuite de fluide caloporteur dans le réservoir d'un débit compris entre 35 et 45 % du débit fourni par l'entrée de fluide caloporteur.

Selon une possibilité de l'invention, l'ouverture de fuite présente une forme sensiblement circulaire, de diamètre compris entre 20 et 30 % du diamètre du tube interne.

Avantageusement, le diamètre du tube interne est de l'ordre de 16 mm et le diamètre de l'ouverture de fuite est de l'ordre de 6 mm.

Selon une caractéristique de l'invention, le tube interne débouche au niveau d'une zone médiane du réservoir.

L'invention concerne en outre une installation comportant un dispositif selon l'invention, caractérisée en ce que l'entrée et la sortie de fluide caloporteur sont raccordées à un réseau de chauffage.

De toute façon l'invention sera bien comprise à l'aide de la description qui suit en référence au dessin schématique annexé représentant, à titre d'exemple non limitatif, une forme de réalisation de ce dispositif d'échange de chaleur.
Figure 1 en est une vue schématique ;
Figure 2 est un diagramme représentant, pour deux régimes distincts, la puissance thermique de l'échangeur en fonction du débit de fuite.

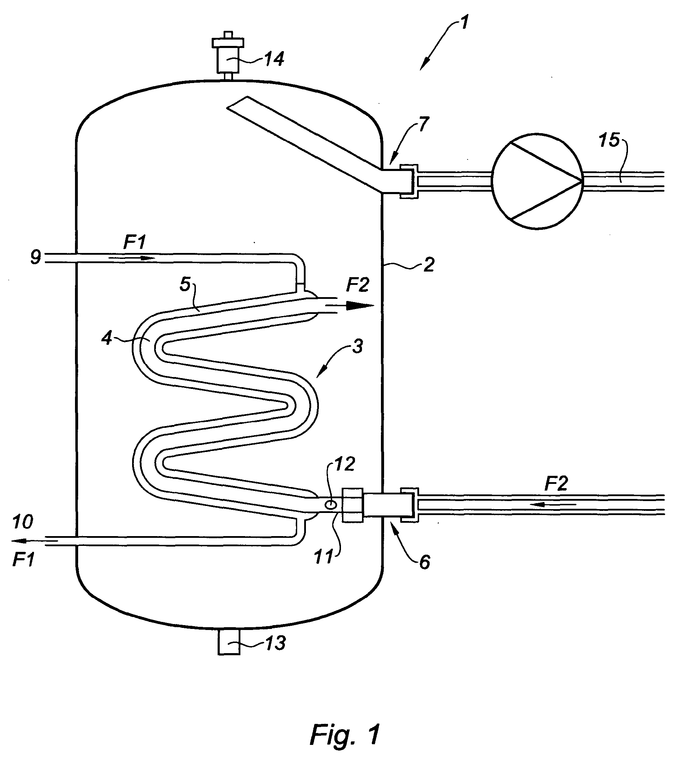

La figure 1 décrit un dispositif d'échange de chaleur 1 entre des fluides appartenant à deux circuits, respectivement un premier circuit dans lequel circule un fluide caloporteur destiné à alimenter des émetteurs et un second circuit dans lequel circule un fluide frigorigène soumis à des changements d'état.

Le fluide caloporteur est préférentiellement de l'eau, associée ou non à un anti-gel.

Le dispositif d'échange de chaleur 1 comporte un réservoir 2 de contenance comprise entre 30 et 50 litres, à l'intérieur duquel est disposé un échangeur 3 à tubes coaxiaux comprenant un tube interne 4 et un tube externe 5.

Le réservoir est équipé d'une entrée 6 de fluide caloporteur disposée en partie basse du réservoir 2 et d'une sortie 7 de fluide caloporteur disposée en partie haute.

L'échangeur à tubes coaxiaux 3 présente la forme d'une hélice.

Les tubes interne 4 et externe 5 sont de forme sensiblement cylindrique et comportent des diamètres externes compris respectivement entre 12 et 28 mm, et entre 25 et 54 mm.

Préférentiellement le diamètre du tube interne 4 est de l'ordre de 16 mm, le diamètre du tube externe 5 étant de l'ordre de 18 mm.

Comme détaillé ci-après, le tube interne 4 est destiné au passage du fluide caloporteur, le tube externe 5 étant destiné au passage du fluide frigorigène.

Le tube interne 4 est raccordé à l'entrée de fluide caloporteur 6 au niveau de son extrémité inférieure et débouche dans le réservoir 2 au niveau de son extrémité supérieure, dans la partie médiane du réservoir.

Le tube externe 5 est raccordé à une entrée 9 de fluide frigorigène au niveau de son extrémité supérieure et à une sortie 10 de fluide frigorigène au niveau de son extrémité inférieure.

Les entrée 9 et sortie 10 de fluide frigorigène sont disposées respectivement en partie médiane et en partie basse du réservoir 2 et sont elles-mêmes raccordées à un circuit classique de circulation de fluide frigorigène, comportant notamment un compresseur et un organe de détente (non représentés).

Le tube interne est prolongé d'une partie 11 s'étendant au-delà du tube externe 5 et présentant une ouverture de fuite 12 ménagée en amont de l'échangeur à tubes coaxiaux 3 par rapport au sens d'écoulement du fluide caloporteur, illustré par la flèche F.

L'ouverture de fuite 12 est de forme circulaire et présente un diamètre de l'ordre de 6 mm. L'ouverture de fuite est orientée vers la paroi latérale du réservoir, selon un axe horizontal, perpendiculaire à l'axe du réservoir.

Le réservoir 2 comporte de plus un robinet de vidange 13 disposé en partie basse et une vanne de purge d'air 14, disposée en partie haute.

Les entrée 6 et sortie 7 de fluide caloporteur peuvent par exemple être reliées de manière classique à un réseau de chauffage 15.

Le fonctionnement du dispositif d'échange de chaleur 1 va maintenant être décrit plus en détail.

En fonctionnement, le fluide frigorigène circule dans le tube externe 5 de l'échangeur coaxial 3, de l'extrémité supérieure de l'échangeur coaxial vers son extrémité inférieure, comme indiqué par la flèche F1.

Le fluide caloporteur circule dans le tube interne 4 de l'échangeur coaxial 3, à contre courant par rapport au sens de circulation du fluide frigorigène, c'est-à-dire depuis l'extrémité inférieure de l'échangeur coaxial 3 vers l'extrémité supérieure de celui-ci. Le sens de circulation du fluide caloporteur est indiqué par la flèche F2. Le fluide frigorigène échange de la chaleur avec le fluide caloporteur par l'intermédiaire de la paroi du tube interne 4.

Le fluide caloporteur s'écoule ensuite par l'extrémité supérieure débouchante du tube interne 4, et alimente le réservoir 2.

Le liquide caloporteur contenu dans le réservoir 2 échange alors à nouveau de la chaleur avec le fluide frigorigène, par l'intermédiaire de la paroi du tube externe 5.

Le fluide caloporteur chaud remonte ensuite en direction de l'extrémité supérieure du réservoir 2, du fait des différences de masse volumique entre le fluide caloporteur chaud et le fluide caloporteur plus froid.

Le fluide caloporteur chaud est ensuite soutiré du réservoir par la sortie 7 de fluide caloporteur afin d'alimenter le circuit de chauffage.

En outre, une partie du fluide caloporteur issu de l'entrée 6 s'échappe par l'ouverture de fuite 12 à l'intérieur du réservoir 2.

La création d'une fuite en amont de l'échangeur coaxial 3 permet d'injecter du fluide caloporteur froid dans le réservoir 2 de manière à augmenter la différence de température entre le fluide caloporteur contenu dans le réservoir 2 et le fluide circulant dans le tube externe 5 de l'échangeur coaxial 3, en partie basse du réservoir.

L'augmentation de la différence de température entre ces deux fluides permet d'augmenter l'efficacité de l'échange de chaleur entre ceux-ci.

En outre, la création d'une fuite permet de favoriser le mouvement du fluide caloporteur à l'intérieur du réservoir 2 et donc un renouvellement du fluide caloporteur au contact du tube externe 5. Ceci permet donc également d'augmenter l'efficacité de l'échange de chaleur entre le fluide caloporteur et le fluide frigorigène circulant dans le tube externe 5.

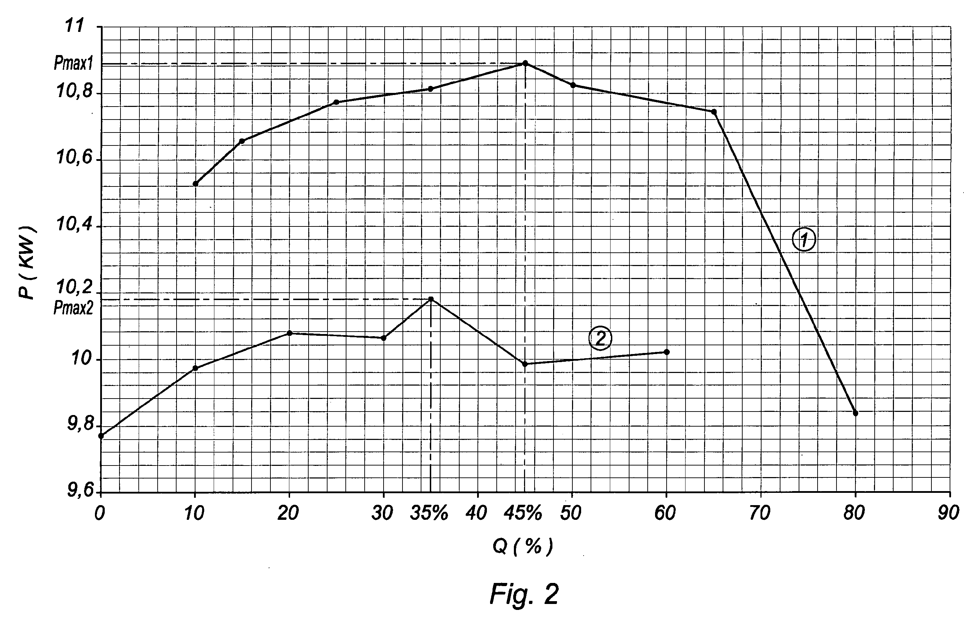

Ces deux phénomènes permettent donc d'augmenter sensiblement le rendement du dispositif d'échange de chaleur 1, comme cela ressort du diagramme de la figure 2.

La figure 2 illustre les résultats obtenus pour un premier et un second régimes de fonctionnement, et pour différentes tailles d'ouverture de fuite 12, c'est-à-dire pour différents débits de fuite.

Dans le premier régime de fonctionnement, la température de départ de l'eau et la température de retour sont respectivement de l'ordre de 35°C et de 30 °C. Dans le second régime de fonctionnement, la température de départ de l'eau et la température de retour sont respectivement de l'ordre de 45°C et de 40 °C.

Plus particulièrement, le diagramme de la figure 2 illustre, pour chacun des deux régimes précités, la puissance thermique P du dispositif d'échange de chaleur 1 en fonction du débit de fuite Q, exprimé en pourcentage du débit de fluide caloporteur au niveau de l'entrée 6.

La courbe 1 représente le premier régime, correspondant au cas où le fluide est extrait à une température de 35 °C.

On remarque que, dans ce cas, la puissance thermique P du dispositif d'échange de chaleur 1 est maximale (Pmax1) lorsque le débit de fuite Q représente environ 45 % du débit de fluide caloporteur au niveau de l'entrée 6.

Dans ce cas, la puissance thermique P est supérieure de 3,8 % à la puissance thermique d'un dispositif similaire d'échange de chaleur de l'art antérieur ne comportant pas d'ouverture de fuite 12.

La courbe 2 représente le premier régime correspondant au cas où le fluide est extrait à une température de 45 °C.

On remarque que, dans ce cas, la puissance thermique P du dispositif d'échange de chaleur 1 est maximale (Pmax2) lorsque le débit de fuite Q représente environ 35 % du débit de fluide caloporteur au niveau de l'entrée 6.

Dans ce cas, la puissance thermique P est supérieure de 4,1 % à la puissance thermique d'un dispositif similaire d'échange de chaleur de l'art antérieur ne comportant pas d'ouverture de fuite 12.

Il apparaît ainsi clairement que la présence de l'ouverture de fuite permet d'augmenter le rendement du dispositif d'échange de chaleur.

## Revendications

1. Dispositif d'échange de chaleur (1) entre des fluides appartenant à deux circuits, respectivement un premier circuit dans lequel circule un fluide caloporteur destiné à alimenter des émetteurs (15) et un second circuit dans lequel circule un fluide frigorigène soumis à des changements d'état, comportant un échangeur à tubes coaxiaux (3) comprenant un tube interne (4) destiné au passage du fluide caloporteur et un tube externe (5) destiné au passage du fluide frigorigène,
le dispositif d'échange de chaleur comportant en outre un réservoir (2), destiné à recevoir le fluide caloporteur et équipé d'une entrée de fluide caloporteur (6) disposée en partie basse du réservoir (2) et d'une sortie de fluide caloporteur (7) disposée en partie haute,
l'échangeur à tubes coaxiaux (3) étant disposé à l'intérieur du réservoir (2) et destiné à être immergé dans le fluide caloporteur, le tube interne (4) étant raccordé à l'entrée de fluide caloporteur (6) à une première extrémité et débouchant dans le réservoir (2) à une seconde extrémité,
**caractérisé en ce que** le tube interne (4) comporte, entre l'entrée (6) du fluide caloporteur dans le réservoir (2) et l'échangeur à tubes coaxiaux, un tronçon (11), non recouvert par le tube externe (5), dans lequel est ménagée au moins une ouverture de fuite (12), et **en ce que** l'ouverture de fuite (12) est dimensionnée de manière à créer une fuite de fluide caloporteur dans le réservoir d'un débit (Q) compris entre 20 et 60 % du débit fourni par l'entrée de fluide caloporteur (6).

2. Dispositif selon la revendication 1, **caractérisé en ce que** couverture de fuite (12) est dimensionnée de manière à créer une fuite de fluide caloporteur dans le réservoir d'un débit (Q) compris entre 35 et 45 % du débit fourni par l'entrée de fluide caloporteur (6).

3. Dispositif selon l'une des revendications 1 à 2, **caractérisé en ce que** l'ouverture de fuite (12) présente une forme sensiblement circulaire, de diamètre compris entre 20 et 30 % du diamètre du tube interne (4).

4. Dispositif selon l'une des revendications 1 à 3, **caractérisé en ce que** le diamètre du tube interne (4) est de l'ordre de 16 mm et le diamètre de l'ouverture de fuite (12) est de l'ordre de 6 mm.

5. Dispositif selon l'une des revendications 1 à 4, **caractérisé en ce que** le tube interne (4) débouche au niveau d'une zone médiane du réservoir (2).

6. Installation comportant un dispositif d'échange de chaleur (1) selon l'une des revendications 1 à 5, **caractérisée en ce que** l'entrée et la sortie de fluide caloporteur (6, 7) sont raccordées à un réseau de chauffage (15).

## Claims

1. A heat exchange device (1) between fluids belonging to two circuits, a first circuit in which a heat transfer fluid intended to supply transmitters (15) circulates and a second circuit in which a refrigerant subject to state modifications circulates, respectively, including an exchanger with coaxial tubes (3) comprising an inner tube (4) intended for the passage of the heat transfer fluid and an outer tube (5) intended for the passage of the refrigerant,
the heat exchange device also including a tank (2), intended to receive the heat transfer fluid and equipped with a heat transfer fluid inlet (6) arranged in the bottom portion of the tank (2) and a heat transfer fluid outlet (7) arranged in the top portion,
the exchanger with coaxial tubes (3) being arranged inside the tank (2) and intended to be submerged in the heat transfer fluid, the inner tube (4) being connected to the heat transfer fluid inlet (6) at a first end and opening into the tank (2) at a second end,
**characterized in that** the inner tube (4) includes, between the inlet (6) of the heat transfer fluid in the tank (2) and the exchanger with coaxial tubes, a section (11), not covered by the outer tube (5), in which at least one leakage opening (12) is formed, and **in that** the leakage opening (12) is dimensioned so as to create a leak of heat transfer fluid in the tank with a flow (Q) between 20 and 60% of the flow provided by the heat transfer fluid inlet (6).

2. The device according to claim 1, **characterized in that** the leakage opening (12) is dimensioned so as to create a leak of heat transfer fluid in the tank with a flow (Q) between 35 and 45% of the flow provided by the heat transfer fluid inlet (6).

3. The device according to one of claims 1 to 2, **characterized in that** the leakage opening (12) has an essentially circular shape, with a diameter between 20 and 30% of the diameter of the inner tube (4).

4. The device according to one of claims 1 to 3, **characterized in that** the diameter of the inner tube (4) is in the vicinity of 16 mm and the diameter of the leakage opening (12) is in the vicinity of 6 mm.

5. The device according to one of claims 1 to 4, **characterized in that** the inner tube (4) opens into a middle zone of the tank (2).

6. A system including a heat exchange device (1) according to one of claims 1 to 5, **characterized in that** the heat transfer fluid inlet and outlet (6, 7) are connected to a heating grid (15).

## Patentansprüche

1. Wärmetauschvorrichtung (1) zwischen Fluiden, die zwei Kreisen angehören, jeweils einem ersten Kreis, in dem ein wärmetragendes Fluid zirkuliert, das zur Versorgung von Strahlern (15) bestimmt ist, und einem zweiten Kreis, in dem ein Kühlfluid zirkuliert, das Zustandsänderungen unterworfen ist, die einen Tauscher mit koaxialen Rohren (3) umfasst, der ein inneres Rohr (4) umfasst, das für den Durchgang des wärmetragenden Fluids vorgesehen ist, und ein äußeres Rohr (5), das für den Durchgang des Kühlfluids vorgesehen ist,
wobei die Wärmetauschvorrichtung weiterhin einen Behälter (2) umfasst, der zur Aufnahme des wärmetragenden Fluids bestimmt ist und mit einem Eingang für das wärmetragende Fluid (6) ausgestattet ist, der im unteren Abschnitt des Behälters (2) angeordnet ist und mit einem Ausgang für das wärmetragende Fluid (7), der im oberen Abschnitt angeordnet ist,
wobei der Tauscher mit koaxialen Rohren (3) im Behälter (2) angeordnet ist und dazu bestimmt, in das wärmetragende Fluid eingetaucht zu werden, wobei das innere Rohr (4) mit dem Eingang des wärmetragenden Fluids (6) an einem ersten Ende verbunden ist und in den Behälter (2) an einem zweiten Ende mündet,
**dadurch gekennzeichnet, dass** das innere Rohr (4) zwischen dem Eingang (6) des wärmetragenden Fluids in den Behälter (2) und dem Tauscher mit koaxialen Rohren einen Rohrabschnitt (11) aufweist, der nicht von dem äußeren Rohr (5) umfangen ist, in dem mindestens eine Abgangsöffnung (12) eingearbeitet ist, und **dadurch**, dass die Abgangsöffnung (12) derart bemessen ist, dass ein Abgang wärmetragenden Fluids in den Behälter mit einem Durchfluss (Q) zwischen 20 und 60 % inklusive des Durchfluss entsteht, der von dem Eingang des wärmetragenden Fluids (6) geliefert wird.

2. Vorrichtung nach Anspruch 1, **dadurch gekennzeichnet, dass** die Abgangsöffnung (12) derart bemessen ist, dass ein Abgang wärmetragenden Fluids in den Behälter mit einem Durchfluss (Q) zwischen 35 und 45 % inklusive des Durchfluss entsteht, der von dem Eingang des wärmetragenden Fluids (6) geliefert wird.

3. Vorrichtung nach einem der Ansprüche 1 bis 2, **dadurch gekennzeichnet, dass** die Abgangsöffnung (12) eine etwa kreisförmige Form aufweist mit einem Durchmesser zwischen 20 und 30 % inklusive des Durchmessers des inneren Rohrs (4).

4. Vorrichtung nach einem der Ansprüche 1 bis 3, **dadurch gekennzeichnet, dass** der Durchmesser des inneren Rohrs (4) zirka 16 mm beträgt und der Durchmesser der Abgangsöffnung (12) zirka 6 mm beträgt.

5. Vorrichtung nach einem der Ansprüche 1 bis 4, **dadurch gekennzeichnet, dass** das innere Rohr (4) auf der Ebene eines mittleren Bereichs des Behälters (2) mündet.

6. Installation, die eine Wärmetauschvorrichtung (1) nach einem der Ansprüche 1 bis 5 umfasst, **dadurch gekennzeichnet, dass** der Eingang und der Ausgang des wärmetragenden Fluids (6, 7) an einen Heizkreis (15) angeschlossen sind.
